# EUROPÄISCHE PATENTSCHRIFT

(11) **EP 1 926 635 B1**
(45) Veröffentlichungstag und Bekanntmachung des Hinweises auf die Patenterteilung: **06.07.2011**
(21) Anmeldenummer: 06777036.2
(22) Anmeldetag: 23.08.2006
(51) Int. Cl.: B60R 13/08, B60J 5/04

(54) **KRAFTFAHRZEUGTÜR**
MOTOR VEHICLE DOOR
PORTIERE D'AUTOMOBILE

(30) Priorität: 09.09.2005 DE 102005043183
(43) Veröffentlichungstag der Anmeldung: 04.06.2008
(73) Patentinhaber: Johnson Controls Interiors GmbH & Co. KG, 47929 Grefrath (DE)
(72) Erfinder: MIEGLITZ, Hans-Helmut, 40789 Monheim (DE); MEYER, Thorsten, 47798 Krefeld (DE)
(74) Vertreter: Wolff, Felix
(86) Internationale Anmeldenummer: PCT/EP2006/008284
(87) Internationale Veröffentlichungsnummer: WO 2007/028500

(56) Entgegenhaltungen:
- DE-A1- 10 135 848
- DE-A1- 10 326 154
- DE-A1- 19 944 965
- US-A1- 2004 113 455

## Beschreibung

Die vorliegende Erfindung betrifft eine Fahrzeugtür, deren Innenraum durch ein Trennmittel in einen äußeren, der Karosserie zugewandten Nassraum und in einen Inneren, der Türverkleidung zugewandten Trockenraum unterteilt ist, und die einen Dichtungsbereich aufweist, innerhalb dessen das Trennmittel zwischen der Karosserie und der Türverkleidung eingespannt ist.

Derartige Fahrzeugtüren sind beispielswseise aus der DE 103 26154 A1, der US 2004/0113455 welche dem Oberbegriff der Anspruchs 1 entspricht, der DE 101 35 848 A1 sowie der DE 101 10 753 A1 bekannt. Die dort beschriebenen Fahrzeugtüren weisen einen Karosserieteil auf, an dem mit einer Dichtraupe eine Kunststofffolie angeordnet ist, welche die Trennung zwischen Nass- und Trockenraum bewirkt. Die Folle wird mit det Innenverkleidung gegen die Karosserie gedrückt. Insbesondere die Fahrzeugtüren gemäß der DE 101 10 753 A1 und der DE 101 36 848 A1 haben sich dahingehend als nachteilig erwiesen, dass eine sichere Abdichtung zwischen Nass- und Trockenraum nur dann gegeben ist, wenn vergleichsweise geringe Fertigungstoleranzen eingehalten werden. Dies erhöht den Fertigungsaufwand erheblich.

Es war deshalb die Aufgabe der vorliegenden Erfindung, eine Türverkleidung zur Verfügung zu stellen, die die Nachteile des Standes der Technik nicht aufweist.

Gelöst wird die Aufgabe mit einer Fahrzeugtür, nach Patentanspruch 1.

Die erfindungsgemäße Fahrzeugtür hat den Vorteil, dass karosserieseitig keine Klebe- oder Dichtungsraupe angeordnet werden muss, mit der das Trennmittel an der Türkarosserie befestigt wird. Die Türverkleidung kann mit Standardelementen an der Karosserie angeordnet werden. Bei der erffindungsgemäßen Tür ist eine wasserdichte Trennung zwischen Nass- und Trockanraum sichergestellt. Das Federmittel wirkt unter anderem als Tolleranzausgleich und als Instrument um die Dichtungskräfte und Montagekräfte zwischen Türverkleidung und Karosserie zu kontrollieren, so dass die Dichtungskräfte immer einen minimalen Wert aufweisen und die Montagekräfte einen maximalen Wert nicht übersteigen. In einer bevorzugten Ausführungsform sind das Trennmittel und die Türverkleidung vor dessen Anordnung an der Karosserie bereits miteinander verbunden. Dies vereinfacht die Montage und vermeidet ein zusätzliches Handling des Trennmittels. Das Trennmittel und die Türverkleidung sind als Vormontagebautell miteinander kombiniert. Die erfindungsgemäße Fahrzeugtür ist einfach und kostengünstig herzustellen.

Erfindungsgemäß weist die Fahrzeugtür eine Karosserie und eine Türverkleidung auf. Zwischen der Karosserie und der Türverkleidung ist ein Trennmittel, vorzugsweise eine Folie oder eine Dichtmatte, angeordnet, die den Innenraum der Fahrzeugtür in einen Nassraum und einen Trockenraum unterteilt. In dem Trockenraum werden vorzugsweise elektrische Bauteile und dergleichen, die keine Nässe vertragen oder möglichst wenig Nässe ausgesetzt werden sollen, angeordnet. Das Trennmittel wird in einem Dichtungsbereich zwischen der Karosserie und der Türverkleidung eingespannt. Die Einspannung gewährleistet die Dichtheit des Dichtungsbereichs.

Erfindungsgemäß ist in dem Dichtungsbereich mindestens ein Federmittel angeordnet. Durch dieses Federmittel wird sichergestellt, dass das Trennmittel in dem Dichtungsbereich, unabhängig von allen gegebenen bauteilabhängigen Fertigungstoleranzen, mit einer definierten minimalen Andruckkraft gegen die Türkarosserie gedrückt wird. Des weiteren verhindert das Federmittel, dass die Andruckkraft einen zu hohen Wert erreicht. Durch die definierte Anpressung des Trennmittels gegen die Türkarosserie wird die Dichtfunktion realisiert. Vorzugsweise ist ein umlaufendes Federmittel im Dichtungsbereich angeordnet, ganz besondere bevorzugt ist das Federelement so abzustimmen, dass im gesamten Dichtungsbereich die minimale Andruckkraft vorliegt.

Das Federmittel kann jedes dem Fachmann geläufige Mittel sein, dass eine gewisse Elastizität aufweist und dass sich bei den zwischen Türverkleidung und Karosserien auftretenden Kräften, vorzugsweise bei der Montage, nur elastisch und nicht plastisch reversibel verformt. Das Federmittel sorgt für einen Fertigungstoleranzunabhänigen, definierten sowie dichtenden Andruck des Trennmittels gegen die Karosserie. Vorzugsweise handelt es sich bei dem Federmittel um eine gängige dem Fachmann aus dem Maschinenbau bekannte Federn aus Kunststoff oder Metall. Weiterhin kann das Federmittel jedoch auch ein Bauteil, beispielsweise ein Kunststoffbauteil sein, das einen Querschnitt aufweist, der sich bei der Montage der Türverkleidung an die Karosserie elastisch verformt und diese Elastizität belbehält. In einer anderen bevorzugten Ausführungsform ist das Federmittel eine Kunststoffschicht, die hinreichende elastische Ergenschaften aufweist. Wichtig dabei ist, dass auch bei einer großen Anzahl von Lastwechsein diese Elastizität bestehen bleibt. Besonders bevorzugt handelt es sich bei dem elastischen Bauteil um eine Schaumraupe, vorzugsweise eine PUR-Schaumraupe.

Erfindungsgemäß ist das Federmittel an der Türverkleidung, besonders bevorzugt form- und/der kraftschlüssig angeordnet.

In einer anderen bevorzugten Ausführungsform ist das Federmittel an dem Trennmittel, besonders bevorzugt stoffschlüssig, angeordnet.

Erfindungsgemäß wirkt das Federmittel mit einem rippenähnlichen Bauteil, das vorzugsweise an der Türverkleidung angeordnet oder in die Türverkleidung integriert ist, zusammen. Vorzugsweise besteht zwischen dem Federmittel und der Türverkleidung, besonders bevorzugt zwischen dem an der Türverkleidung angeordneten oder in die Türverkleidung integrierten rippenähnlichen Bauteil, ein Form- und/oder Kraftschluss.

Vorzugsweise ist das Trennmittel über das Federmittel form- und/oder kraftschlüssig, besonders bevorzugt jedoch lösbar, mit der Türverkleidung verbunden. Durch diese bevorzugte Ausführungsform der vorliegenden Erfindung können die Türverkleidung und das Trennmittel als vormontiertes Bauteil mit der Karosserie verbunden werden. Dies erleichtert die Montage erheblich, weil ein separates Handling des Trennmittels vermieden wird.

Als Trennmittel eignet sich jedes Mittel, das zumindest weitgehend wasser und wasserdampfundurchlässig ist. Vorzugsweise handelt es sich bei dem Trennmittel um eine Kunststofffolie oder um eine Kunststoffschaummatte.

Vorzugsweise wird die Türverkleidung mit Rastmitteln, beispielsweise mit Clipverbindungen, reversibel an der Karosserie angeordnet.

Im folgenden wird die Erfindung anhand der Figuren 1 bis 8 erläutert. Diese Erläuterungen sind lediglich beispielhaft und schränken den allgemeinen Erfindungsgedanken nicht ein.
- **Figur 1**: zeigt eine Fahrzeugtorverkleidung,
- **Figur 2**: zeigt die Fahrzeugtürverkleidung und die dazugehörige Karosserie im Schnitt,
- **Figur 3**: zeigt den Detailschnitt gemäß Figuren 4 bis 8,
- **Figuren 4 bis 8**: zeigen mögliche Ausführungsformen des Dichtungsbereichs der erfindungsgemäßen Fahrzeugtür.

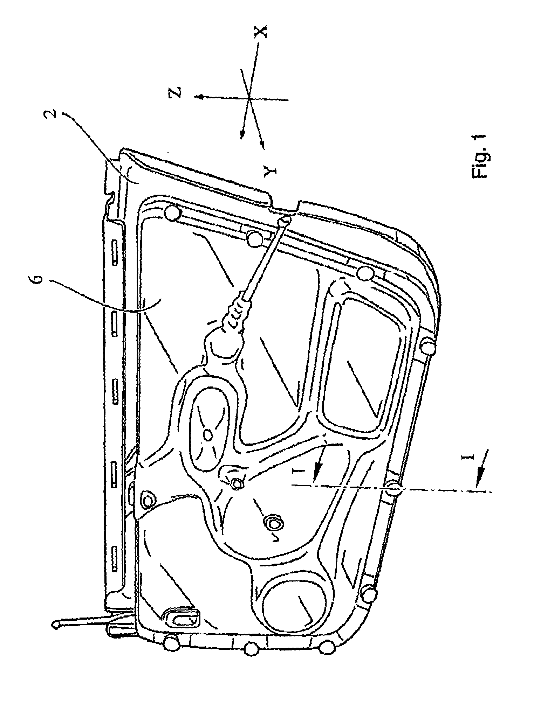

Figur 1 zeigt die Türverkleidung 2 der erfindungsgemäßen Fahrzeugtür, an der ein Trennmittel 6, eine Dichtungsfolie, bereits vormontiert ist Diese vormontierte Baugruppe wird in einem späteren Schritt mit dem Karosserie der Fahrzeugtür verbunden. Mit der Dichtungsfolie 6 wird ein Trockenraum erzeugt, in dem alle Aggregate und elektronischen Bauteile angeordnet und somit vor Wasser bzw. Wasserdampf geschützt werden können.

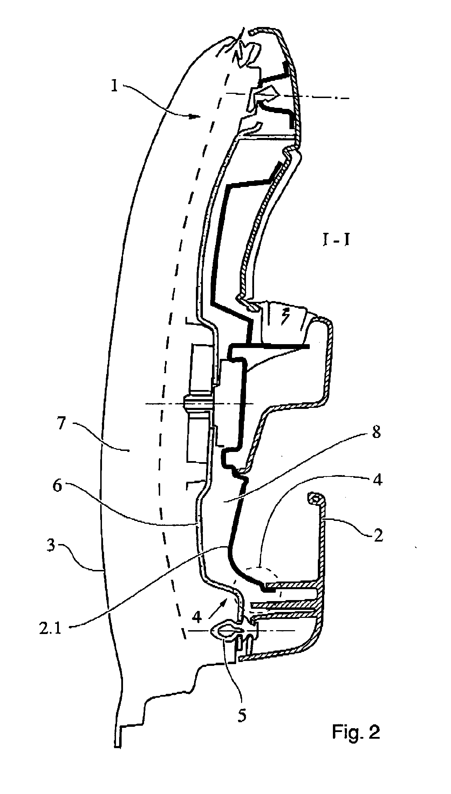

In **Figur 2** ist ein Schnitt durch eine Türverkleidung gemäß **Figur 1** dargestellt, wobei in der vorliegenden Darstellung zusätzlich die Karosserie der Tür 1 eingezeichnet ist. Die erfindungsgemäße Fahrzeugtür 1 besteht aus einem Karosserieteil 3 sowie einer Türverkleidung 2, 2.1. Des weiteren weist die Fahrzeugtür 1 ein Trennmittel 6, in dem vorliegenden Fall eine Dichtungsfolie 6, auf, die den Innenraum der Fahrzeugtür 1 in einen Nassraum 7 und einen Trockenraum 8 aufteilt. Der Dichtungsbereich zwischen der Karosserie 3 und der Dichtungsfolie 6 ist in **Figur 2** mit dem Bezugszeichen 14 gekennzeichnet. Der Fachmann versteht, das der Dichtungsbereich um die gesamte Türkarosserie herumläuft.

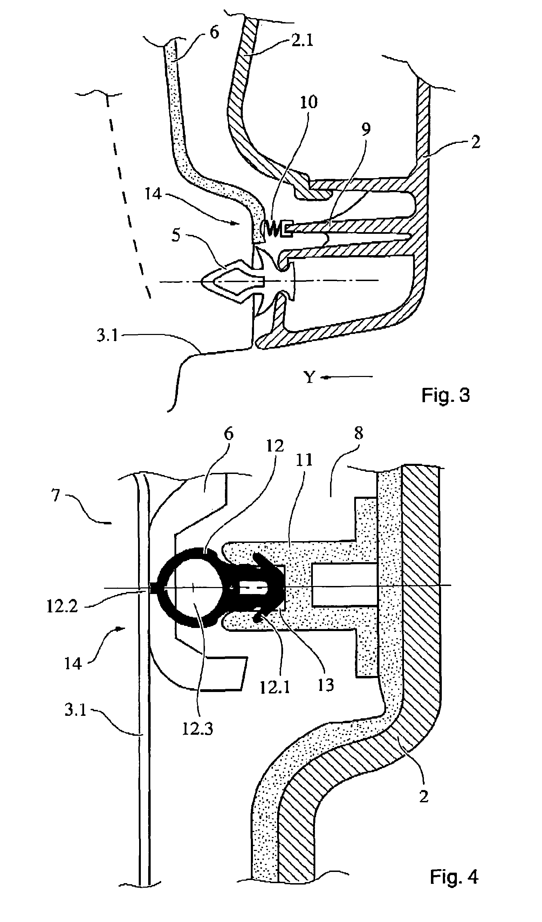

**Figur 3** zeigt eine Detaildarstellung des in **Figur 2** umrandeten und mit Bezugszeichen 4 gekennzeichneten Bereichs. Zu erkennen ist ein Teilbereich 3.1 der Karosserie 3, an dem mittels eines Clips 5 die Innenverkleidung 2, 2.1 befestigt ist. In das Innenverkleidungsteil 2 sind Rippen 9 integriert, an deren Spitze ein Ende einher Feder 10 form- und/oder kraftschlüssig befestigt ist. Das andere Ende der Feder 10 wirkt mit der Folie 6 zusammen und drückt diese im Dichtungsbereich 14 gegen das Karosserieelement 3.1. Die Feder 10 ist nach der Anordnung der Türverkleidung 2, 2.1 an der Karosserie 3, 3.1 ständig vorgespannt, so dass die Folie 6 immer mit einem Mindestdruck gegen das Karosserieelement 3.1 gedrückt wird und somit verhindert wird, dass der Dichtungsbereich 14 undicht wird. Andererseits verhindert die Feder 10, solang noch ein Federweg vorhanden ist, dass die Anpresskraft, mit der die Folie 6 gegen das Karosserieelement 3.1 gedrückt wird, ein maximalen Wert überschreitet und die Folie 6 beschädigt. Weiterhin ist es möglich, dass durch die Erhöhung der Montagekraft, die benötigt wird um die Türverkleidung an der Karosserie zu befestigen durch die Federkraft so groß wird, dass eine Montage nicht mehr möglich ist.

**Figur 4** zeigt eine weitere Ausführungsform der erfindungsgemäßen Fahrzeugtür, wobei lediglich das Detail 4 gemäß Figur 2 dargestellt ist. In dem vorliegenden Fall ist das Federmittel 12 ein Hohlprofil oder Dichtungsprofil, das in einer Nut 13 einer Druckrippe 11 angeordnet ist, die wiederum mit der Türverkleidung 2 verbunden ist. Für den Form- und/oder Kraftschluss zwischen dem Hohl oder Dichtungsprofil und der Nut 13, weist das Profil 12 Zähne 12.1 auf, die mit Einbuchtungen in der Nut 13 zusammenwirken. An den den Zähnen gegenüberliegenden Enden weist das Federmittel 12 einen im wesentlichen kreisrunden hohlen Bereich 12.3 auf, an dessen Spitze eine Lippe 12.2 angeordnet ist. Sowohl die Lippe 12.2 als auch der hohle Bereich 12.3 sind elastisch verformbar und zumindest der Bereich 12.2 auch zu eine Ellipse elastisch verformt. Diese Lippe 12.2 und Teile des hohlen Bereichs drückern die Folie 6 an das Karosserieteil 3.1 an. Die Dichtlippe 12.2 ermöglicht eine linienförmige Andrückung der Folie an das Karosserieteil 3. Der Werkstoff des Dichtungsprofils ist in dem vorliegenden Fall EPDM. Bei der Montage wird zunächst das Dichtungsprofil 12 in der Nut 13 positioniert. Danach wird die Folie 6 über das umlaufende Dichtungsprofil gespannt.

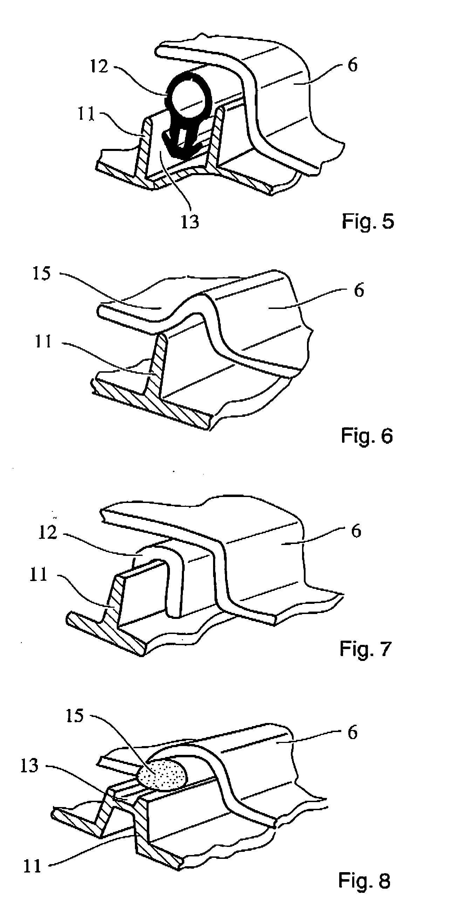

In den **Figuren 5 bis 8** sind weitere Ausführungsformen des Federmittels dargestellt.

In **Figur 5** ist das Federelement ein Dichtungshohlprofil 12, dessen eines Ende mit einer Nut 13, die sich an einer Druckrippe 11 befindet, form- und/oder kraftschlüssig zusammenwirkt. Das andere Ende des Dichtungsprofils 12 ist wiederum oval bis kreisförmig und damit elastisch verformbar gestaltet. Dieser runde, ovale Bereich wirkt mit der Dichtungsfolie 6 zusammen und drückt diese gegen die Türkarosserie (nicht dargestellt). Der Teil des Dichtungsprofils 12, der mit der Nut 13 zusammenwirkt, weist Zähne (Widerhaken) auf, die ein Herausrutschen des Dichtungsprofils aus der Nut verhindern.

In **Figur 6** ist das Federelement eine Schaumraupe 15, die stoffschlüssig an der Folie 6 angeordnet ist. Diese Schaumraupe 15 wiederum wirkt mit einer Druckrippe 11 zusammen. Die Folie 6 wird vor der Einbringung der Schaumraupe 15 tiefgezogen, beispielsweise thermoverformt. Der dabei gebildete Kanal in der Folie 6 wirkt für die Schaumraupe, bei deren Einbringung in den Kanal, formgebend und/oder begrenzend. Bei der Montage der Folie auf der Druckrippe 11 entsteht zwischen dem Kanal und der Druckrippe eine quasi Führung für eine Positionierung über der Schaumraupe..

Bei der in **Figur 7** dargestellten Ausführungsform ist das Federelement ein auf eine Druckrippe 11 aufgestecktes elastisches Kunststoffprofil 12, das direkt mit der Folie 6 zusammenwirkt und mit dieser verbunden sein kann. Das Kunststoffprofil wird beim Einbau elastisch komprimiert, so dass als Federelement wirkt.

**Figur 8** zeigt eine Ausführungsform, bei der das Federelement eine Schaumraupe 15 ist, die form- und/oder kraftschlüssig oder stoffschlüssig mit einer Nut 13, die an einer Druckrippe 11 angeordnet ist, zusammenwirkt. Auch diese Schaumraupe, beispielsweise PUR-Schaum, wird beim Einbau komprimiert und drückt sodann die Folie 6 gegen das Karosserieteil 3, 3.1.

### Bezugszeichenliste

- 1: Fahrzeugtür
- 2: Türverkleidung
- 2.1: Türverkleidung, Innenwand
- 3: Karosserie
- 3.1: Karosserie, Innenblech
- 4: Dichtungszone
- 5: Clip
- 6: Trennmittel, Folie
- 7: Nassraum
- 8: Trockenraum
- 9: Druckrippe
- 10: Federelement
- 11: Druckrippe
- 12: Dichtungsprofil
- 12.1: Zähne
- 12.2: Lippe
- 12.3: Hohler Bereich
- 13: Nut
- 14: Dichtungsbereich
- 15: Schaumraupe

## Patentansprüche

1. Fahrzeugtür (1), deren Innenraum durch ein Trennmittel (6) in einen äußeren, der Karosserie (3) zugewandten Nassraum (7) und in einen inneren, der Türverkleidung (2, 2.1) zugewandten Trockenraum (8) unterteilt ist, und die einen Dichtungsbereich (14) aufweist, innerhalb dessen das Trennmittel (6) zwischen der Karosserie (3) und der Türverkleidung (2, 2.1) eingespannt ist, wobei in dem Dichtungsbereich (14) mindestens ein Federmittel (10, 12, 15) angeordnet ist, **dadurch gekennzeichnet, dass** das Federmittel (10, 12, 15) an der Türverkleidung (2, 2. 1) angeordnet ist und das Federmittel (10, 12, 15) mit einem rippenähnlichen Bauteil (9, 11) zusammenwirkt, das an der Türverkleidung (2, 2.1) angeordnet oder integriert ist.

2. Fahrzeugtür nach Anspruch 1, **dadurch gekennzeichnet, dass** das Trennmittel (6) über das Federmittel (10, 12, 15) form- und/oder kraftschlüssig, vorzugsweise jedoch lösbar, mit der Türverkleidung verbunden ist.

3. Fahrzeugtür nach einem der voranstehenden Ansprüche, **dadurch gekennzeichnet, dass** das Trennmittel (6) eine Kunststofffolie oder ein Dichtmatte ist.

4. Fahrzeugtür (1) nach einem der voranstehenden Ansprüche, **dadurch gekennzeichnet, dass** die Türverkleidung (2, 2.1) mit Rastmitteln (5) an der Karosserie (3) angeordnet ist.

## Claims

1. Vehicle door (1), the interior thereof being subdivided by a separating means (6) into an external wet space (7) facing the body (3) and into an internal dry space (8) facing the door lining (2, 2.1) and which comprises a sealing region (14), within which the separating means (6) is clamped between the body (3) and the door lining (2, 2.1), with at least one spring means (10, 12, 15) being arranged in the sealing region (14) **characterized in that** the spring means (10, 12, 15) is arranged on the door lining (2, 2.1), and the spring means (10, 12, 15) cooperates with a rib-like component (9, 11), which is arranged on, or incorporated in, the door lining (2, 2.1).

2. Vehicle door as claimed in Claim 1, **characterized in that** the separating means (6) is connected positively and/or non-positively, preferably however releasably, to the door lining via the spring means (10, 12, 15).

3. Vehicle door as claimed in one of the preceding claims, **characterized in that** the separating means (6) is a plastics sheet or a sealing mat.

4. Vehicle door (1) as claimed in one of the preceding claims, **characterized in that** the door lining (2, 2.1) is arranged on the body (3) by latching means (5).

## Revendications

1. Portière d'automobile (1), dont l'espace interne est divisé par un moyen de séparation (6) en un espace humide (7) externe tourné vers la carrosserie (3) et en un espace sec (8) interne tourné vers l'habillage de la portière (2, 2.1), et qui présente une région d'étanchéité (14) à l'intérieur de laquelle le moyen de séparation (6) est serré entre la carrosserie (3) et l'habillage de la portière (2, 2.1), au moins un moyen de ressort (10, 12, 15) étant disposé dans la région d'étanchéité (14), **caractérisée en ce que** le moyen de ressort (10, 12, 15) est disposé sur l'habillage de la portière (2, 2.1) et le moyen de ressort (10, 12, 15) coopère avec un composant (9, 11) de type nervure, qui est disposé sur ou intégré à l'habillage de la portière (2, 2.1).

2. Portière d'automobile selon la revendication 1, **caractérisée en ce que** le moyen de séparation (6) est connecté par le biais du moyen de ressort (10, 12, 15) par engagement par coopération de forme et/ou par force, de préférence toutefois de manière détachable, à l'habillage de la portière.

3. Portière d'automobile selon l'une quelconque des revendications précédentes, **caractérisée en ce que** le moyen de séparation (6) est un film en plastique ou une natte d'étanchéité.

4. Portière d'automobile (1) selon l'une quelconque des revendications précédentes, **caractérisée en ce que** l'habillage de la portière (2, 2.1) est disposé avec des moyens d'encliquetage (5) sur la carrosserie (3).
